Europäisches Patentamt

European Patent Office

Office européen des brevets

(19)

(11) **EP 0 921 643 A1**

(12) ## DEMANDE DE BREVET EUROPEEN

(43) Date de publication:
09.06.1999 Bulletin 1999/23

(51) Int Cl.$^6$: **H04B 3/48**

(21) Numéro de dépôt: 98402967.8

(22) Date de dépôt: 27.11.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 02.12.1997 FR 9715436

(71) Demandeur: FRANCE TELECOM SA
75015 Paris (FR)

(72) Inventeurs:
• Gardan, Daniel
22300 Lannion (FR)
• Collobert, Daniel
22300 Ploulec'h (FR)

(74) Mandataire: **Maillet, Alain**
**Cabinet Le Guen & Maillet,**
**38, rue Levavasseur,**
**B.P. 91**
**35802 Dinard Cedex (FR)**

(54) **Procédé d'estimation de l'affaiblissement d'une ligne par échométrie**

(57) Dans ce procédé d'estimation, pour interpréter l'écho, on utilise un réseau de neurones. Le réseau est, de préférence, du type Perceptron Multicouche et comprend trois couches: une couche d'entrée (E), une couche cachée (C) et une couche de sortie (S). Les couches sont reliées par des poids de connexion ou synapses.

La couche d'entrée (E) comprend un nombre de neurones égal au double du nombre de points décrivant l'écho.

FIG.3

# Description

L'invention concerne un procédé d'estimation de l'affaiblissement d'une ligne téléphonique par échométrie.

Les câbles à paires symétriques ou lignes bifilaires sont utilisés en transmission proche pour les réseaux locaux d'entreprise (en terminologie anglo-saxone, L.A.N. ou Local Access Network) et dans le réseau local des opérateurs de télécommunication. Ces câbles à paires symétriques sont construits par assemblage soit de paires à 2 fils isolés ou torsadés, soit de quartes en étoile à 4 fils isolés et torsadés, soit encore de quartes à paires combinables torsadées.

Quel que soit le type de câble utilisé, il est nécessaire de connaître l'affaiblissement de la ligne. On sait que cet affaiblissement est proportionnel à la longueur de la ligne et à la racine carrée de la fréquence, mais qu'il dépend aussi de la nature du câble, c'est-à-dire du diamètre des fils de celui-ci, de la nature de l'isolant, etc.

Les opérateurs de télécommunication ne connaissent pas avec certitude la longueur et la nature des câbles des lignes téléphoniques. Une première méthode connue de mesure de l'affaiblissement consiste à injecter sur la paire téléphonique un signal d'une fréquence donnée et de niveau connu, tandis qu'à l'extrémité distante, un agent mesure le niveau du signal reçu. Cette méthode nécessite le déplacement sur le terrain d'une personne, ce qui n'est pas envisageable à grande échelle compte tenu du nombre élevé de lignes téléphoniques.

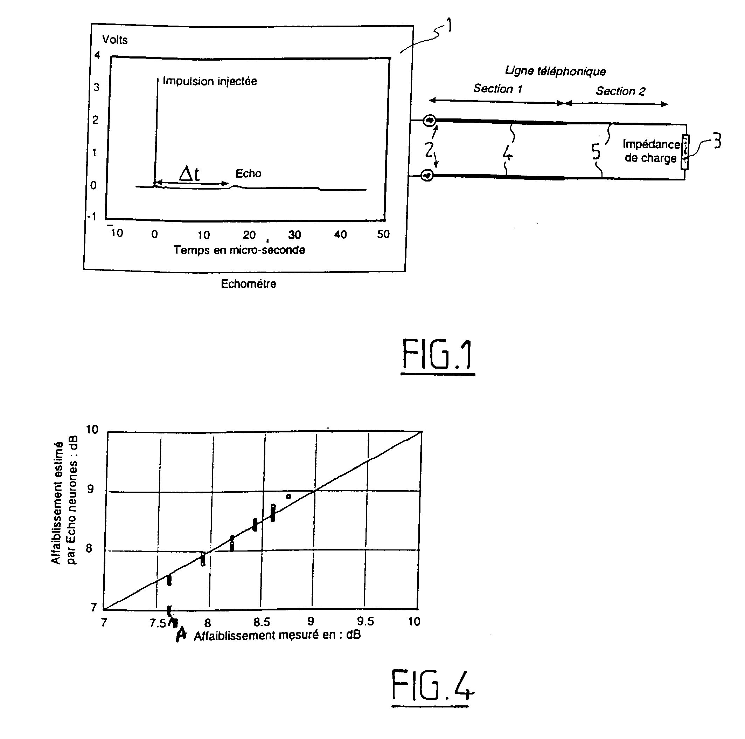

Il est également connu d'utiliser une méthode d'échométrie pour estimer la longueur d'une ligne téléphonique. Un échomètre injecte sur la ligne téléphonique une impulsion de plusieurs volts et d'une largeur de l'ordre de 100 ns, voire un peu plus. Le signal injecté est réfléchi sur l'impédance de charge de la ligne téléphonique laquelle, comme le montre la Fig. 1, peut être constituée d'une ou de plusieurs sections, chaque section correspondant à une nature différente de paire. Si t est le temps aller-retour de l'impulsion et V la vitesse de propagation du signal, la longueur L de la ligne est donnée par la formule suivante:

$$L = (\Delta t \cdot V)/2$$

Mais, l'opérateur de télécommunication ne connaît pas a priori la constitution de la ligne et la connaissance de la longueur totale de la ligne n'est pas suffisante pour estimer l'affaiblissement de la ligne. En effet, pour connaître l'affaiblissement total de la ligne, il faudrait connaître la longueur et la nature de chacune des sections.

Pour interpréter l'écho, ne connaissant pas les paramètres primaires de la ligne, c'est-à-dire résistance linéique, inductance, capacité et perditance, ni les paramètres secondaires, c'est-à-dire impédance caractéristique et exposante linéique de propagation, on ne peut utiliser l'équation du télégraphiste, c'est-à-dire le système d'équations suivant:

$$V = ch\gamma x.V_1 - z_c.sh\gamma x.I_1$$

$$I = ch\gamma x.I_1 - sh\gamma x.(Z_c)^{-1}.V_1$$

x étant l'abscisse du point considéré, $V_1$ et $I_1$ la différence de potentiel et l'intensité à l'origine, $Z_c$ l'impédance caractéristique et $\gamma$ l'exposant linéique de propagation. L'affaiblissement linéique correspond à la partie réelle de l'exposant linéique $\gamma$ qui s'écrit:

$$\gamma = \alpha + i\beta$$

Un objet de l'invention consiste à surmonter les difficultés mentionnées ci-dessus en interprétant la forme et le niveau de l'écho pour estimer l'affaiblissement de la ligne.

Suivant une caractéristique de la présente invention, il est prévu un procédé d'estimation de l'affaiblissement d'une ligne téléphonique par échométrie dans lequel pour interpréter l'écho on utilise un réseau de neurones.

Suivant une autre caractéristique, le réseau de neurones est du type Perceptron Multicouche et comprend trois couches: une couche d'entrée, une couche cachée et une couche de sortie, les couches étant reliées par des poids de connexion ou synapses.

Suivant une autre caractéristique, la couche d'entrée comprend un nombre de neurones égal au double du nombre de points décrivant l'écho.

Les caractéristiques de l'invention mentionnées ci-dessus, ainsi que d'autres, apparaîtront plus clairement à la lecture de la description suivante, ladite description étant faite en relation avec les dessins joints, parmi lesquels:

la Fig. 1 est un schéma synoptique illustrant comment est utilisé un échomètre,
la Fig. 2 est un diagramme montrant, à plus grande échelle, l'évolution de la tension en fonction du temps sur la ligne testée par échométrie,
la Fig. 3 est une représentation schématique d'un réseau de neurones utilisé pour estimer la valeur d'affaiblissement cherchée, et
la Fig. 4 est un diagramme montrant un exemple de résultats obtenus par le procédé d'estimation de l'invention.

Le schéma synoptique de la Fig. 1 montre un échomètre 1 connecté aux deux fils d'une ligne téléphonique 2 fermée sur une impédance de charge 3. La ligne téléphonique 2 comporte deux sections de câbles différents 4 et 5. Dans le rectangle symbolisant l'échomètre 1, on a dessiné un diagramme de l'évolution de la tension injectée sur la ligne 2, puis de la tension reçue en écho.

L'échomètre 1 injecte sur la ligne 2, au temps 0, une impulsion de plus de 3 volts et d'une largeur de l'ordre de 100 ns. Le signal injecté est réfléchi sur l'impédance de charge 3, ce qui se traduit par un écho reçu au bout d'un temps T qui dans l'exemple montré est de l'ordre de 15 microsecondes. Le niveau de cet écho, ainsi que sa forme, sont fonction de la longueur totale de la ligne 2, de la longueur de chacune des sections 3 et 4, et de la nature de chacune des sections. Comme on l'a mentionné plus haut, l'opérateur ne connaît pas toutes ces caractéristiques et, donc, ne peut donner précisément une valeur de l'affaiblissement de la ligne testée.

Suivant l'invention, on utilise, à cet effet, un réseau de neurones.

Le réseau de neurones utilisé est un réseau à plusieurs couches. L'algorithme d'apprentissage utilisé est l'apprentissage par rétropropagation de l'erreur. Les différents poids du réseau de neurones sont optimisés afin de réduire l'erreur quadratique entre l'estimation de l'affaiblissement estimé à une fréquence donnée, telle que 150 kHz, et l'affaiblissement mesuré.

Lors de la phase d'apprentissage, des mesures sont effectuées sur un grand nombre de câbles terminés par une impédance de charge pouvant correspondre aux cas que l'on rencontre dans un réseau en exploitation: circuit ouvert, circuit fermé, ou bien encore paires terminées par un ou plusieurs postes téléphoniques.

Pour chaque configuration de mesure, le signal est échantillonné à 100 MHz et l'affaiblissement en dB à 150 kHz correspondant à la sortie désirée du réseau de neurones est mesuré à l'aide d'un analyseur de réseau.

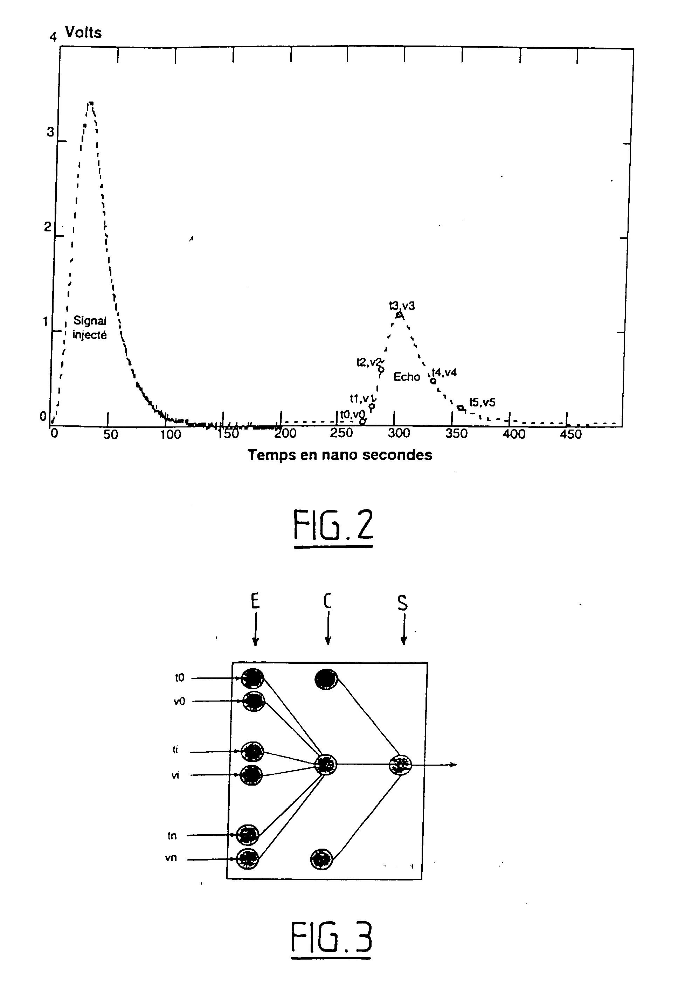

Le diagramme de la Fig. 2 qui montre le signal injecté par l'échomètre et surtout l'écho entre 250 et 400 ns permet d'illustrer le fonctionnement du réseau de neurones utilisé dans le dispositif de l'invention.

Cet écho est décrit par six points caractéristiques:

t0, v0      début de l'écho
t1, v1      le niveau du signal de l'écho est à 10 % du maximum de l'écho
t2, v2      premier point d'inflexion
t3, v3      maximum de l'écho
t4, v5      second point d'inflexion
t5, v5      le niveau du signal est à 10 % du maximum et se situe après le maximum

Plus précisément, comme le montre la Fig. 3, le réseau de neurones utilisé dans l'invention est du type Perceptron Multicouche et comprend trois couches: une couche d'entrée E, une couche cachée C et une couche de sortie S. Les couches E, C et S sont reliées par ce qu'il est convenu d'appeler des poids de connexion ou synapses, ou encore coefficients de pondération.

La couche d'entrée E comprend un nombre de neurones égal au double du nombre de points décrivant l'écho, c'est-à-dire dans le cas particulier de la Fig. 2 six paires de neurones d'entrée, chaque paire recevant le temps $t_i$ et le niveau de tension $v_i$ relatifs à un point caractéristique.

La couche de sortie S comprend un neurone en sortie donnant l'affaiblissement et, éventuellement, un neurone en sortie donnant la longueur de la ligne.

La couche cachée C comprend un nombre de neurones qui peut varier entre dix et cinquante.

Pour l'apprentissage, selon un mode de réalisation, la couche d'entrée E du réseau de neurones reçoit six paires de signaux d'entrée caractérisant une forme d'écho. Les poids des connexions sont calculés en utilisant un algorithme d'apprentissage par rétropropagation de l'erreur faite en sortie du réseau par rapport aux sorties souhaitées. La procédure d'apprentissage nécessite d'avoir plusieurs formes d'échos correspondant à plusieurs affaiblissements obtenus, par exemple, en faisant varier la longueur de la ligne.

Le calcul des poids peut être très long car le problème est NP-complet, mais on sait trouver des poids sous-optimaux dans un temps polynomial.

Selon l'invention, après apprentissage, le réseau de neurones ainsi calculé permet d'obtenir à sa sortie une estimation de l'affaiblissement d'une ligne particulière lorsqu'on applique aux neurones d'entrée de la couche E du réseau de neurones des valeurs correspondant à un écho mesuré sur cette ligne.

Le réseau de neurones donne l'affaiblissement avec une erreur absolue de l'ordre de + ou - 0,2 dB, quelle que soit l'impédance de charge de la ligne.

Si la couche de sortie S comprend deux neurones, l'un peut donner l'affaiblissement tandis que l'autre estime la longueur de la ligne.

La Fig. 4 montre un diagramme sur lequel sont indiqués des résultats d'estimations d'affaiblissements. En abscisse, sont portés en dB les affaiblissements à 150 kHz qui ont été mesurés, avec un analyseur de réseau, pour un certain nombre de lignes, et, en ordonnées, sont portés en dB les affaiblissements à 150 kHz qui ont été estimés, pour les mêmes lignes, par échométrie en utilisant un réseau de neurones suivant l'invention. Sur le diagramme, on a également tracé la bissectrice de pente égale à 1.

Pour chaque longueur d'une ligne quelconque, par exemple la ligne A dont l'affaiblissement mesuré est voisin de 7,6 dB, on a quatre points estimés en fonction de l'impédance de charge de la ligne, points qui correspondent à un seul poste téléphonique branché sur la ligne, à deux postes téléphoniques branchés sur la ligne, à un court-circuit ou à un circuit ouvert.

Idéalement, les quatre points devraient être confondus sur la bissectrice, ils ne le sont pas mais ils sont assez proches pour que les estimations puissent être considérées comme des mesures d'affaiblissement.

## Revendications

1.  Procédé d'estimation de l'affaiblissement d'une ligne téléphonique par échométrie caractérisé en ce que, pour interpréter l'écho, on utilise un réseau de neurones.

2.  Procédé suivant la revendication 1, caractérisé en ce que le réseau de neurones est du type Perceptron Multicouche et comprend trois couches: une couche d'entrée (E), une couche cachée (C) et une couche de sortie (S), les couches étant reliées par des poids de connexion ou synapses.

3.  Procédé suivant la revendication 2, caractérisé en ce que la couche d'entrée (E) comprend un nombre de neurones égal au double du nombre de points (t0, v0 à t5, v5) décrivant l'écho.

FIG.1

FIG.4

**Volts**

FIG.2

FIG.3

**Office européen des brevets**

## RAPPORT DE RECHERCHE EUROPEENNE

Numéro de la demande

EP 98 40 2967

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 467 148 A (STAFFORD JAMES A ET AL) 21 août 1984 <br> * abrégé * <br> * colonne 4, ligne 10 - ligne 29 * <br> --- | 1-3 | H04B3/48 |
| A | EP 0 533 540 A (THOMSON CSF) 24 mars 1993 <br> * page 1, ligne 1 - page 1, ligne 55 * <br> ----- | 1-3 | |

DOMAINES TECHNIQUES RECHERCHES (Int.Cl.6)

G06F
H04B

Le présent rapport a été établi pour toutes les revendications

| Lieu de la recherche | Date d'achèvement de la recherche | Examinateur |
|---|---|---|
| LA HAYE | 9 février 1999 | De Iulis, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**

EP 98 40 2967

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnes à titre indicatif et n'engagent pas la responsabilité de l'Office européen des brevets.

09-02-1999

| Document brevet cité au rapport de recherche | Date de publication | Membre(s) de la famille de brevet(s) | | Date de publication |
|---|---|---|---|---|
| US 4467148 A | 21-08-1984 | AUCUN | | |
| EP 0533540 A | 24-03-1993 | FR | 2681709 A | 26-03-1993 |
| | | CA | 2078274 A | 21-03-1993 |
| | | JP | 5204887 A | 13-08-1993 |
| | | US | 5408585 A | 18-04-1995 |

EPO FORM P0460

Pour tout renseignement concernant cette annexe : voir Journal Officiel de l'Office européen des brevets, No.12/82